# EUROPÄISCHE PATENTSCHRIFT

(11) **EP 4 332 806 B1**
(45) Veröffentlichungstag und Bekanntmachung des Hinweises auf die Patenterteilung: **25.12.2024**
(21) Anmeldenummer: 22192580.3
(22) Anmeldetag: 29.08.2022
(51) Int. Cl.: G06F 21/57

(54) **AUTOMATISIERUNGSCONTROLLER UND VERFAHREN ZUM BETRIEB EINES AUTOMATISIERUNGSCONTROLLERS**
AUTOMATION CONTROLLER AND METHOD FOR OPERATING AN AUTOMATION CONTROLLER
CONTRÔLEUR D'AUTOMATISATION ET PROCÉDÉ DE FONCTIONNEMENT D'UN CONTRÔLEUR D'AUTOMATISATION

(43) Veröffentlichungstag der Anmeldung: 06.03.2024
(73) Patentinhaber: Siemens Aktiengesellschaft, 80333 München (DE)
(72) Erfinder: Hog, Ronny, 92245 Kümmersbruck (DE); Kamp, André, 91083 Baiersdorf (DE); Lang, Ulrich-Volker, 91336 Heroldsbach (DE); Schötz, Sebastian, 92256 Hahnbach (DE); Walter, Markus, 96050 Bamberg (DE)
(74) Vertreter: Siemens Patent Attorneys

(56) Entgegenhaltungen:
- EP-A1- 3 819 804
- US-A1- 2008 291 907

## Beschreibung

Das Patent US 2008/291907 wird als nächstliegender Stand der Technik gegenüber dem Gegenstand der Erfindung angesehen.

Die Erfindung betrifft einen Automatisierungscontroller umfassend einen Prozessor, auf welchen ein Betriebssystem geladen ist, einen ersten Interfacebaustein mit zumindest einem ersten Ethernet-Kanal und einem zweiten Ethernet-Kanal, welcher an eine erste Selektionsschaltung angeschlossen sind, einen zweiten Interfacebaustein mit zumindest einem ersten Ethernet-Kanal und einem zweiten Ethernet-Kanal, welcher an eine zweite Selektionsschaltung angeschlossen sind, eine erste Netzwerkschnittstelle für den Anschluss an ein erstes Netzwerk und eine zweite Netzwerkschnittstelle für den Anschluss an ein zweites Netzwerk, Verbindungsmittel ausgeschaltet die Selektionsschaltungen mit den Netzwerkschnittstellen zu verbinden, ein erstes Register mit einem ersten Registerwert und ein zweites Register mit einem zweiten Registerwert, dabei sind die Selektionsschaltungen ausgestaltet, entsprechend den Registerwerten die Ethernet-Kanäle den Netzwerkschnittstellen zuzuordnen.

Insbesondere wenn ein Automatisierungscontroller als eine auf funktionale Sicherheit ausgestaltete Automatisierungssteuerung ausgelegt ist, dürfen sicherheitsrelevante Einstellungen, wie z.B. Hardware-Konfigurationen, nicht verfälscht werden und müssen dementsprechend zur Laufzeit abgesichert werden. Bisher erfolgte eine derartige Absicherung in sogenannten F-CPU's (fehlersicher) aus einem Anwenderprogramm. Die bisherige Lösung ist für abzusichernde Werte, die nicht auf dem Anwenderprogramm erreichbar sind, nicht anwendbar. Auch muss eine Erkennung einer möglichen Verfälschung auch in einem Stopp-Zustand des Automatisierungscontrollers bzw. ohne die Zuhilfenahme eines Sicherheitsprogramms (F-Programm/Anwenderprogramm) erfolgen.

Es ist demnach die Aufgabe der Erfindung einen Automatisierungscontroller bereitzustellen, welcher Verfälschungen, insbesondere Verfälschungen von Registerwerten für Netzwerkschnittstellen-Zuordnungen, sicher erkennt.

Für den eingangs genannten Automatisierungscontroller wird die Aufgabe dadurch gelöst, dass das Betriebssystem ausgestaltet ist in einem festlegbaren Zyklus eine Zahl zu generieren und das ein Abfragemittel vorhanden ist, welches ausgestaltet ist mit jedem Zyklus auf die Registerwerte mit der Zahl eine logische Funktion anzuwenden, wodurch ein Rückgabewert erzeugt wird, das Betriebssystem ist weiterhin ausgestaltet auf den Rückgabewert mit der Zahl die logische Funktion erneut anzuwenden, wodurch wieder die Registerwerte erzeugt werden, weiterhin sind Codeanweisungen vorhanden, welche ausgestaltet sind, die wieder erzeugten Registerwerte mit Prüfwerten zu vergleichen und bei einer Abweichung den Automatisierungscontroller in einen sicheren Zustand zu versetzen.

Eine Absicherung eines sicherheitsrelevanten Wertes, insbesondere des Registerwertes, zur Realisierung einer Netzwerktrennung, erfolgt nun durch eine doppelte Eingabe (Soll-Wert und einem Prüf-Wert).

Weiterhin ist es von Vorteil, dass der Ist-Wert zyklisch ausgelesen wird und mit dem Prüfwert vergleichen wird. Bei einer Ungleichheit erfolgt eine entsprechende Reaktion z.B. Stopp-Zustand oder Defekt mit Abschaltung aller Netzwerkschnittstellen.

Ein Auslesen des Ist-Wertes der Registerwerte könnte über folgenden Mechanismus realisiert werden. Über einen asynchronen Dienst, kann über PNIO-Basispakete ein Kanal zu einem EDDP (Ethernet Device Driver PNIP) definiert werden. Mit dem Betriebssystem des Automatisierungscontrollers könnte beispielsweise alle 1.000 ms ein 32 Bit-Zufallswert generiert werden und dem EDDP übergeben werden. In dem EDDP wird der 32 Bit-Zufallswert mit den Istwerten XOR verknüpft und dem Betriebssystem zurückgeliefert. Diese sogenannten Ist-Port-Mapping Werte werden dann von dem Automatisierungscontroller mit besonderen Codeanweisungen mit den Prüfwerten verglichen und bei einer Abweichung wechselt der Automatisierungscontroller beispielsweise in einen Defektzustand und damit werden alle physikalischen Ports/Netzwerkschnittstellen abgeschaltet.

Eine weitere Ausgestaltungsvariante des Automatisierungscontrollers sieht eine Prüfwerttabelle mit den Prüfwerten und eine Kombinationstabelle vor, in der Kombinationstabelle sind die Kombinationen der Zuordnungen der Ethernet-Kanäle zu den Netzwerkschnittstellen aufgelistet, wobei in der Prüfwerttabelle für jede Kombination ein der jeweiligen Kombination zugeordneter Prüfwert hinterlegt ist. Da man nun den Kombinationen bekannte Prüfwerte zugeordnet hat, kann man ein eingestelltes Port-Mapping gegen eine Erwartungshaltung zyklisch testen.

Die Prüfung wird weiterhin verbessert, wenn der Automatisierungscontroller Codeanweisungen aufweist, welche ausgestaltet sind den ersten wieder erzeugten Registerwert mit einem ersten Faktor zu multiplizieren und zu prüfen, ob das Produkt dem ersten Prüfwert entspricht, und dem zweiten wieder erzeugten Registerwert mit einem zweiten Faktor zu multiplizieren und zu prüfen, ob das Produkt dem zweiten Prüfwert entspricht.

Wird beispielsweise eine Multiplikation mit 0×200_{H} als erster Prüfwert und eine Multiplikation mit 0x200 00O_{H} als zweiter Prüfwert gemacht, kann damit auch eine Veränderung des Registerinhaltes um nur ein Bit (niedrigster Wert) bei der Prüfung zur Laufzeit aufgedeckt werden.

Im Hinblick auf eine Profisafe-Anwendung ist es von Vorteil, wenn die Registerwerte für die Zuordnung der Ethernet-Kanäle zu den Netzwerkschnittstellen derart gewählt sind, dass sichergestellt ist, dass das erste Netzwerk und das zweite Netzwerk voneinander getrennt sind.

Eine derartige sicherheitsrelevante Einstellung der Register-Werte muss gegen Verfälschung durch Hardware- und Software-Fehler abgesichert werden. Diese Einstellung (Register-Werte) betrifft die Funktion "Netzwerktrenner nach IEC 61784-3-3 (Profisafe)", die von einer fehlersicheren CPU (F-CPU) zur Verfügung gestellt wird. Die Absicherung kann in vorteilhafter Weise auch ohne ein Anwenderprogramm (F-Programm) bzw. auch im Stopp wirksam durchgeführt werden.

Im Sinne der Erfindung wird unter Netzwerktrenner ein absoluter Netzwerktrenner zwischen zwei Netzwerkschnittstellen verstanden. Für den Fall, dass die erste Netzwerkschnittstelle und die zweite Netzerkschnittstelle zu unterschiedlichen lokalen Ethernet-Schnittstellen bzw. Netzerken gehören, dürfen für diese Schnittstellen keine Überbrückungen auf der Kommunikationsebene 2 implementiert sein. Falls die erste Schnittstelle zu einen lokalen Ethernet-Netzwerk führen sollte und die andere zu einem Rückwandbusmodul des Automatisierungscontrollers mit einer Ethernet-Schnittstelle dürfen auch für diese Konfiguration keine Überbrückungen auf der Kommunikationsebene 2 implementiert sein.

Von Vorteil ist es, wenn der Automatisierungscontroller ein Eingabemittel aufweist, welches ausgestaltet ist, dass ein Anwender die Kombinationen auswählen und einstellen kann. Über ein Display an dem Automatisierungscontroller könnte ein Anwender beispielsweise die Schnittstellenvarianten bzw. Kombinationen auswählen. Die ausgewählte Kombination könnte der Anwender durch die Bestätigung des zugehörigen Prüfwertes bestätigen.

Weiterhin wird die eingangs genannte Aufgabe durch ein Verfahren zum Betrieb eines Automatisierungscontrollers gelöst, wobei zur Netzwerktrennung von einem ersten Netzwerk und einem zweiten Netzwerk ein erster Registerwert eines ersten Registers und ein zweiter Registerwert eines zweiten Registers gegen Verfälschungen durch Hardware- und Software-Fehler überwacht wird, wobei die Registerwerte zur Einstellung von einer ersten bzw. zweiten Selektionsschaltung genutzt werden, dabei werden die Selektionsschaltungen betrieben, entsprechend den Registerwerten, Ethernet-Kanäle von Interface-Bausteinen Netzwerkschnittstellen und damit den Netzwerken zuzuordnen, wobei aus einem Betriebssystem des Automatisierungscontrollers in einen festlegbaren Zyklus eine Zahl generiert wird und mit jedem Zyklus auch die Registerwerte mit der Zahl eine logische Funktion angewendet wird, wodurch ein Rückgabewert erzeugt wird, in dem Betriebssystem wird wiederum auf den Rückgabewert mit der Zahl die logische Funktion angewendet wodurch wieder die Registerwerte erzeugt werden, weiterhin werden Codeanweisungen durchlaufen, welche die wieder erzeugten Registerwerte mit Prüfwerten vergleichen und bei einer Abweichung den Automatisierungscontroller in einem sicheren Zustand versetzen.

Im Hinblick auf eine Implementierung der Codeanweisung hat sich eine Prüfwerttabelle mit Prüfwerten und eine Kombinationstabelle als hilfreich erwiesen, in der Kombinationstabelle werden Kombinationen der Zuordnungen der Ethernet-Kanäle zu den Netzwerkschnittstellen aufgelistet und für den Vergleich genutzt, wobei in der Prüfwerttabelle für jede Kombination ein der jeweiligen Kombination zugeordneter Prüfwert hinterlegt wird.

Um auch Änderungen von nur 1 Bit erkennen zu können, wird der erste wieder erzeugte Registerwert mit einem ersten Faktor multipliziert und es wird geprüft, ob das Produkt dem ersten Prüfwert entspricht, und der zweite wieder erzeugte Registerwert wird mit einem zweiten Faktor multipliziert und es wird geprüft, ob das Produkt dem zweiten Prüfwert entspricht.

Wir ein Automatisierungscontroller im Hinblick auf funktionale Sicherheit betrieben, so ist es von Vorteil, wenn der Automatisierungscontroller als eine auf funktionale Sicherheit ausgelegter Automatisierungssteuerung betrieben wird und die Netzwerktrennung von dem ersten Netzwerk und dem zweiten Netzwerk nach der Norm IEC 61784-3 erfolgt.

Die Zeichnung zeigt ein Ausführungsbeispiel der Erfindung.

Dabei zeigt die
- FIG 1: den Automatisierungscontroller,
- FIG 2: eine Kombinationstabelle,
- FIG 3: eine Prüfwerttabelle und
- FIG 4: eine Veranschaulichung einer Belegung eines Registers mit einem Registerwert.

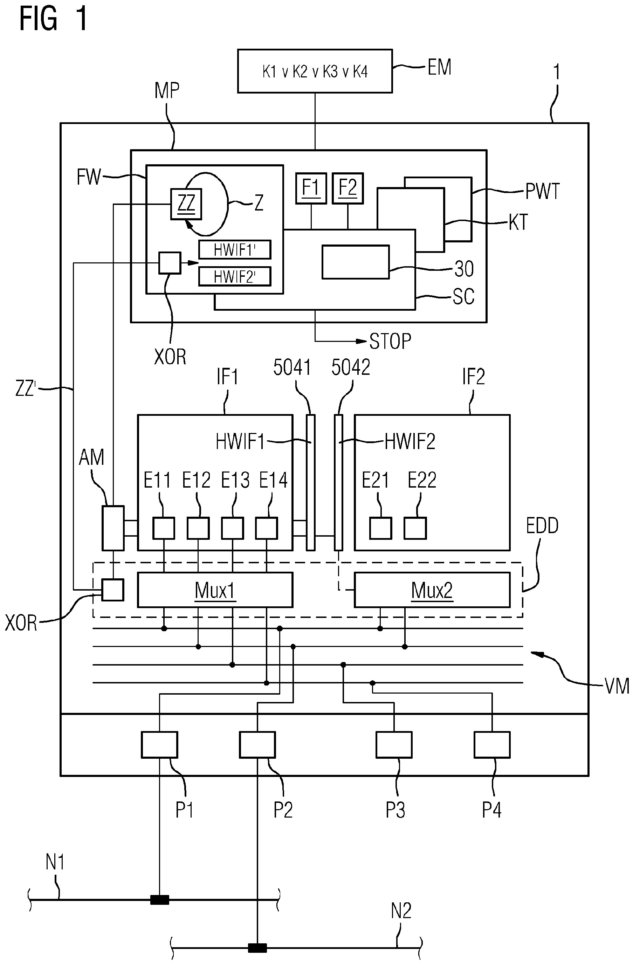

Mit der FIG 1 ist ein Automatisierungscontroller 1 dargestellt. Der Automatisierungscontroller 1 weist einen Prozesser MP auf, auf welchem ein Betriebssystem FW geladen ist. Für Kommunikationsverbindungen weist der Automatisierungscontroller 1 einen ersten Interfacebaustein IF1 und einen zweiten Interfacebaustein IF2 auf. Der erste Interfacebaustein IF1 ist beispielsweise als ein PN-IP 100 Megabit/s Baustein ausgestaltet. Der zweite Interfacebaustein IF2 ist als ein PN-IP 100 Gigabit/s Baustein ausgestaltet. Zwischen den Interfacebausteinen IF1,IF2 und Netzwerkschnittstellen P1,...,P4 sind Selektionsschaltungen Mux1,Mux2 angeordnet. Da der erste Interfacebaustein IF1 einen ersten Ethernetkanal E11, einen zweiten Ethernetkanal E12, einen dritten Ethernetkanal E13 und einen vierten Ethernetkanal E14 aufweist, können demzufolge unterschiedliche Ethernetkanäle E11,...,E14 über die Selektionsschaltungen Mux1,Mux2 mit unterschiedlichen Netzwerkschnittstellen P1,P2,P3,P4 verbunden werden. Dazu weist der Automatisierungscontroller 1 ein erstes Register 5041 mit einem ersten Registerwert HWIF1 und zweites Register 5042 mit einem zweiten Registerwert HWIF2 auf. Die Selektionsschaltungen Mux1,Mux2 sind ausgestaltet entsprechend den Registerwerten HIF1,HIF2 die Ethernetkanäle E11,...,E22 den Netzwerkschnittstellen P1,P2,P3,P4 zuzuordnen. Da die Zuordnung, insbesondere auf eine Funktionalität eines Netzwerktrenners in einer Profisafe-Umgebung sicherheitsrelevant ist, müssen die zugeordneten Registerwerte HWIF1,HWIF2 überwacht werden.

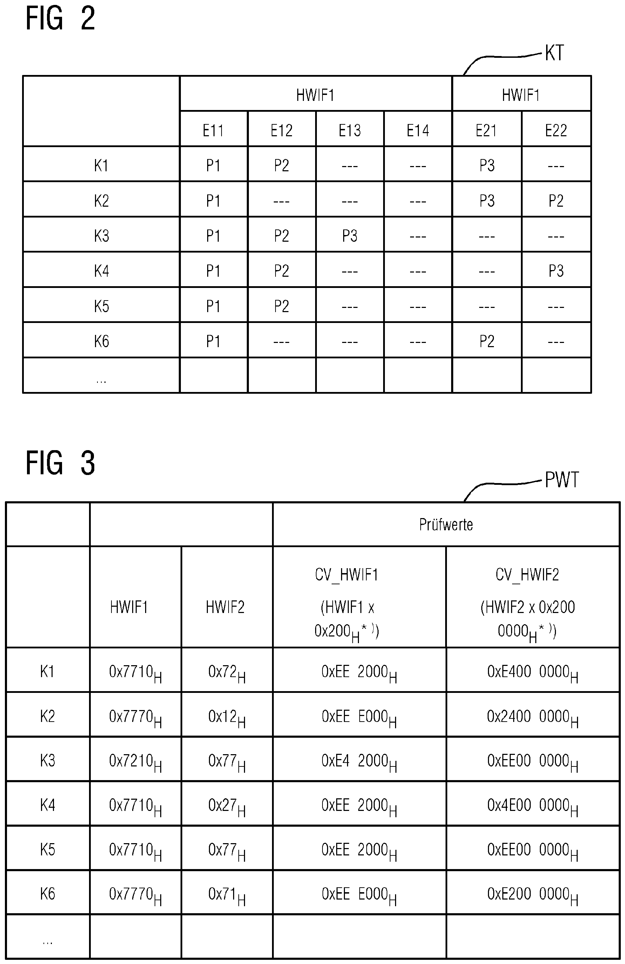

Dazu ist das Betriebssystem FW dazu ausgestaltet, in einen festlegbaren Zyklus Z eine Zahl ZZ, z.B. eine Zufallszahl, zu generieren und über ein Abfragemittel AM, welches ausgestaltet ist, mit jedem Zyklus Z auf die Registerwerte HWIF1,HWIF2 mit der Zahl ZZ eine logische Funktion anzuwenden. Dadurch wird ein Rückgabewert ZZ' erzeugt, und dem Betriebssystem FW zurückgegeben. In dem Betriebssystem FW wird auf den zurückgegebenen Rückgabewert ZZ' mit der Zahl ZZ erneut die logische Funktion XOR angewendet, wodurch wieder die Registerwerte HHIF1`,HWIF2` erzeugt werden. Für eine weitere Prüfung sind Codeanweisungen SC vorhanden, welche ausgestaltet sind, die wieder erzeugten Registerwerte HWIF1', HWIF2' mit Prüfwerten CV_HWIF1,CV_HWIF2 (siehe FIG 3) zu vergleichen und bei einer Abweichung dem Automatisierungscontroller 1 in einen sicheren Zustand zu versetzen. Dazu steht beispielsweise ein Vergleichsmittel 30 bereit, welches den Automatisierungscontroller 1 in einen Stopp-Zustand zwingt.

Die Codeanweisungen SC sind weiterhin ausgestaltet, den ersten wieder erzeugten Registerwert HWIF1' mit einen ersten Faktor F1 zu multiplizieren und zu prüfen, ob das Produkt dem ersten Prüfwert CV_HWIF1 entspricht, und den zweiten Registerwert HWIF2' mit einen zweiten Faktor F2 zu multiplizieren und zu prüfen, ob das Produkt dem zweiten Prüfwert CV_HWIF2 entspricht.

Als eine beispielhafte Konfiguration des Automatisierungscontrollers 1 hinsichtlich eines Netzwerktrenners wird die sechste Kombination K6 aus der in FIG 2 gezeigten Konfigurationstabelle KT gewählt. Die sechste Kombination K6 sieht vor, dass der erste Ethernetkanal E11 des ersten Interfacebausteins IF1 an die erste Netzwerkschnittstelle P1 geschaltet ist und das der zweite Ethernetkanal E12 des zweiten Interfacebausteines IF2 an die zweite Netzwerkschnittstelle P2 geschaltet ist.

Aus der FIG 3 ergeben sich für die sechste Kombination K6 folgende Registerwerte. Der erste Registerwert HWIF1 bekommt den Wert 0×7770_{H} und der zweite Registerwert HWIF2 bekommt den Wert 0×71_{H}. Entsprechend werden für den ersten Registerwert HWIF1 und den zweiten Registerwert HWIF2 bei der sechsten Kombination K6 die Prüfwerte 0xEE E000_{H} und 0xE200 0000_{H} gewählt. Das bedeutet eine Multiplikation des Registerwertes 0×770_{H} mit 0×200_{H} muss den entsprechenden Prüfwert 0xEE E000_{H} ergeben.

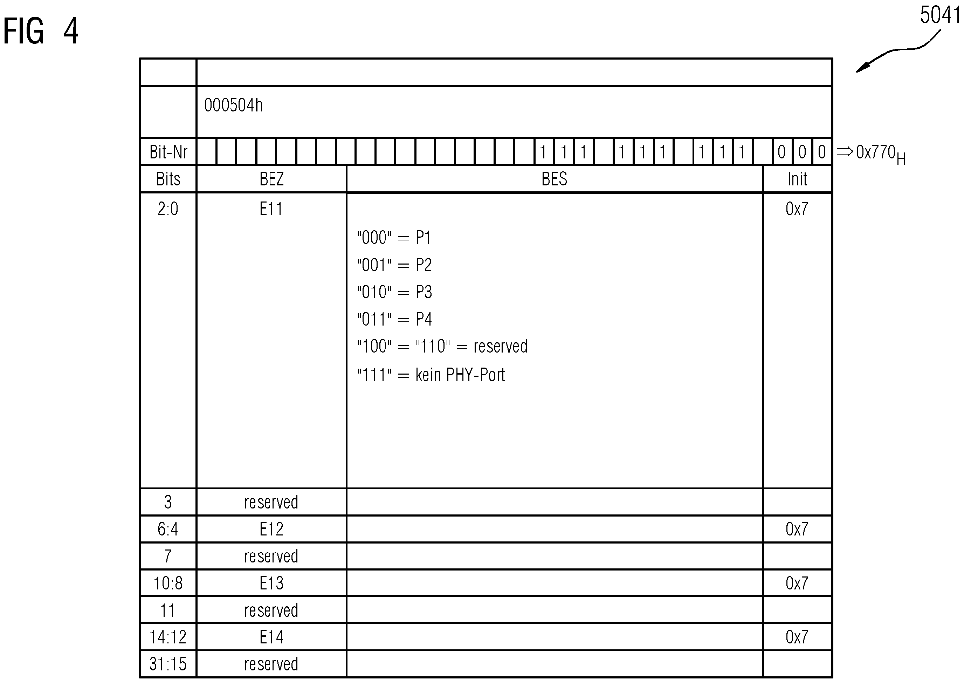

Die FIG 4 zeigt am Beispiel des ersten Registers 5041 eine mögliche Belegung. Das erste Register 5041 hat die Adresse 000504H. In einer Zeile mit der Bezeichnung Bit-Nummer können 32 Bits für das Register vergeben werden. Als Beispiel wurde die Konfiguration 0×7770_{H} vergeben. Das bedeutet die Bits 0 bis 2 sind mit 0 belegt, die Bits 4 bis 6 sind mit 1 belegt, die Bits 8 bis 10 sind ebenfalls mit 1 belegt und die Bits 12 bis 14 sind auch mit 1 belegt. Dualzahlen können in Vierergruppen aufgeteilt werden und einfach in Hexadezimalzahlen umgerechnet werden, d.h. ein Block mit vier "1" entspricht einer "7". In der Erklärungsspalte für die Bit-Nummern 0 bis 2 wird aufgezeigt, dass eine Konfiguration mit "000" gleichbedeutend ist mit einer Verschaltung auf die erste Netzwerkschnittstelle P1, eine Belegung der Bits "001" einer Verschaltung mit der zweiten Netzwerkschnitte E2 entspricht, eine Belegung der Bits mit "010" einer Verschaltung mit der dritten Netzwerkschnittstelle P3 entspricht und eine Belegung mit "011" einer Verschaltung zu der vierten Netzwerkschnittstelle P4 entspricht. Die Belegung der Bits mit "100" bis "110" ist reserviert und verhält sich wie die Belegung mit "111" welches gleichzusetzen ist mit keiner Netzwerkschnittstellenzuordnung.

Als Initialwert erhalten alle Bits 0x7_{H} welches wiederum "111" entspricht und somit zur Sicherheit keine Portzuweisung darstellt.

## Patentansprüche

1. Automatisierungscontroller (1) umfassend
- einen Prozessor (MP), auf welchen ein Betriebssystem (FW) geladen ist,
- einen ersten Interfacebaustein (IF1) mit zumindest einem ersten Ethernet-Kanal (E11) und einem zweiten Ethernet-Kanal (E12), welcher an eine erste Selektionsschaltung (Mux1) angeschlossen sind,
- einen zweiten Interfacebaustein (IF2) mit zumindest einem ersten Ethernet-Kanal (EA21) und einem zweiten Ethernet-Kanal (EA22), welcher an eine zweite Selektionsschaltung (Mux2) angeschlossen sind,
- eine erste Netzwerkschnittstelle (P1) für den Anschluss an ein erstes Netzwerk (N1) und eine zweite Netzwerkschnittstelle (P2) für den Anschluss an ein zweites Netzwerk (N2),
- Verbindungsmittel (VM) ausgestaltet die Selektionsschaltungen (Mux1, Mux2) mit den Netzwerkschnittstellen (P1,P2) zu verbinden,
- ein erstes Register (5041) mit einem ersten Registerwert (HWIF1) und ein zweites Register (5042) mit einem zweiten Registerwert (HWIF2), dabei sind die Selektionsschaltungen (Mux1,Mux2) ausgestaltet entsprechend den Registerwerten (HWIF1,HWIF2) die Ethernet-Kanäle (E11,...,E22) den Netzwerkschnittstellen (P1,P2) zuzuordnen,
**dadurch gekennzeichnet, dass** das Betriebssystem (FW) ausgestaltet ist in einem festlegbaren Zyklus (Z) eine Zahl(ZZ) zu generieren und dass ein Abfragemittel (AM) vorhanden ist, welches ausgestaltet ist mit jedem Zyklus (Z) auf die Registerwerte (HWIF1,HWIF2) mit der Zahl (ZZ) eine logische Funktion (XOR) anzuwenden, wodurch ein Rückgabewert (ZZ') erzeugt wird, das Betriebssystem (FW) ist weiterhin ausgestaltet auf den Rückgabewert (ZZ') mit der Zahl(ZZ) die logische Funktion (XOR) anzuwenden, wodurch wieder die Registerwerte (HWIF1',HWIF2') erzeugt werden, weiterhin sind Codeanweisungen (SC) vorhanden, welche ausgestaltet sind die wieder erzeugten Registerwerte (HWIF1',HWIF2') mit Prüfwerten (CV_HWIF1,CV_HWIF2) zu vergleichen und bei einer Abweichung den Automatisierungscontroller (1) in einen sicheren Zustand zu versetzen.

2. Automatisierungscontroller nach Anspruch 1, aufweisend eine Prüfwerttabelle (PWT) mit den Prüfwerten (CV_HWIF1, CV_HWIF2) und eine Kombinationstabelle (KT), in welcher Kombinationen (K1,...,K6) der Zuordnungen der Ethernet-Kanäle (E11,...,E22) zu den Netzwerkschnittstellen (P1,P2) aufgelistet sind, wobei in der Prüfwerttabelle (PWT) für jede Kombination (K1,...,K6) ein der jeweiligen Kombination zugeordneter Prüfwert (CV_HWIF1,CV_HWIF2) hinterlegt ist.

3. Automatisierungscontroller (1) nach Anspruch 2, wobei die Codeanweisungen (SC) ausgestaltet sind den ersten wieder erzeugten Registerwert (HWIF1') mit einem ersten Faktor (F1) zu multiplizieren und zu prüfen, ob das Produkt dem ersten Prüfwert (CV_HWIF1) entspricht, und den zweiten wieder erzeugten Registerwert (HWIF2') mit einem zweiten Faktor (F2) zu multiplizieren und zu prüfen, ob das Produkt dem zweiten Prüfwert (CV_HWIF2) entspricht.

4. Automatisierungscontroller (1) nach einem der Ansprüche 1 bis 3, wobei die Registerwerte (HWIF1,HWIF2) für die Zuordnung der Ethernet-Kanäle (E11,...,E22) zu den Netzwerkschnittstellen (P1,P2) derart gewählt sind, dass sichergestellt ist, dass das erste Netzwerk (N1) und das zweite Netzwerk (N2) voneinander getrennt sind.

5. Automatisierungscontroller nach einem der Ansprüche 2 bis 4, wobei ein Eingabemittel (EM) vorhanden ist, welches ausgestaltet ist, dass ein Anwender die Kombinationen (K1, ..., K6) auswählen und einstellen kann.

6. Verfahren zum Betrieb eines Automatisierungscontrollers (1), wobei zur Netzwerktrennung von einem ersten Netzwerk (N1) und einem zweiten Netzwerk (N2) ein erster Registerwert (HWIF1) eines ersten Registers (5041) und ein zweiter Registerwert (HWIF2) eines zweiten Registers (5042) gegen Verfälschungen durch Hardware- und Softwarefehler überwacht werden, wobei die Registerwerte (HWIF1,HWIF2) zur Einstellung von einer ersten bzw. zweiten Selektionsschaltung (Mux1,Mux2) genutzt werden, dabei werden die Selektionsschaltungen (Mux1,Mux2) betrieben entsprechend den Registerwerten (HWIF1,HWIF2) Ethernet-Kanäle (E11,...,E22) von Interfacebausteinen (IF1, IF2) Netzwerkschnittstellen (P1,P2) und damit den Netzwerken (NW1,NW2) zuzuordnen, wobei aus einem Betriebssystem (FW) des Automatisierungscontrollers (1) in einem festlegbaren Zyklus (Z) eine Zahl(ZZ) generiert wird und mit jedem Zyklus (Z) auf die Registerwerte (HWIF1,HWIF2) mit der Zahl (Z) eine logische Funktion (XOR) angewendet wird, wodurch ein Rückgabewert (Z') erzeugt wird, in dem Betriebssystem (FW) wird wiederum auf den Rückgabewert (Z') mit der Zahl(ZZ) die logische Funktion (XOR) angewendet, wodurch wieder die Registerwerte (HWIF1',HWIF2') erzeugt werden, weiterhin werden Codeanweisungen (SC) durchlaufen, welche die wieder erzeugten Registerwerte (HWIF1',HWIF2') mit Prüfwerten (CV_HWIF1,CV_HWIF2) vergleichen und bei einer Abweichung den Automatisierungscontroller (1) in einen sicheren Zustand versetzen.

7. Verfahren nach Anspruch 6, wobei eine Prüfwerttabelle (PWT) mit den Prüfwerten (CV_HWIF1, CV_HWIF2) und eine Kombinationstabelle (KT), in welcher Kombinationen (K1,...,K6) der Zuordnungen der Ethernet-Kanäle (E11,...,E22) zu den Netzwerkschnittstellen (P1,P2) aufgelistet sind genutzt wird, wobei in der Prüfwerttabelle (PWT) für jede Kombination (K1,...,K6) ein der jeweiligen Kombination (K1,...,K6) zugeordneter Prüfwert (CV_HWIF1,CV_HWIF2) hinterlegt wird.

8. Verfahren nach Anspruch 6 oder 7, wobei mit den Codeanweisungen (SC) der erste wieder erzeugte Registerwert (HWIF1') mit einem ersten Faktor (F1) multipliziert wird und geprüft wird, ob das Produkt dem ersten Prüfwert (CV_HWIF1) entspricht, und der zweite wieder erzeugte Registerwert (HWIF2') mit einem zweiten Faktor (F2) multipliziert wird und geprüft wird, ob das Produkt dem zweiten Prüfwert (CV_HWIF2) entspricht.

9. Verfahren nach einem der Ansprüche 6 bis 8, wobei der Automatisierungscontroller (1) als eine auf funktionale Sicherheit ausgelegte Automatisierungssteuerung betrieben wird und die Netzwerktrennung von dem ersten Netzwerk (N1) und dem zweiten Netzwerk (N2) nach der Norm IEC 61784-3 erfolgt.

## Claims

1. Automation controller (1) comprising
- a processor (MP), onto which an operating system (FW) is loaded,
- a first interface module (IF1) with at least a first Ethernet channel (E11) and a second Ethernet channel (E12), which are connected to a first selection circuit (Mux1),
- a second interface module (IF2) with at least a first Ethernet channel (EA21) and a second Ethernet channel (EA22), which are connected to a second selection circuit (Mux2),
- a first network interface (P1) for the connection to a first network (N1) and a second network interface (P2) for the connection to a second network (N2),
- connection means (VM) designed to connect the selection circuits (Mux1, Mux2) with the network interfaces (P1, P2),
- a first register (5041) with a first register value (HWIF1) and a second register (5042) with a second register value (HWIF2), here the selection circuits (Mux1, Mux2) are designed to assign the Ethernet channels (E11,...,E22) to the network interfaces (P1, P2) in accordance with the register values (HWIF1, HWIF2),
**characterised in that** the operating system (FW) is designed to generate a number (ZZ) in a definable cycle (Z) and that a query means (AM) is present, which is designed to apply a logical function (XOR) to the register values (HWIF1, HWIF2) with the number (ZZ) with each cycle (Z), as a result of which a return value (ZZ') is produced, the operating system (FW) is further designed to apply the logical function (XOR) to the return value (ZZ') with the number (ZZ), as a result of which the register values (HWIF1', HWIF2') are produced again, furthermore code instructions (SC) are present, which are designed to compare the reproduced register values (HWIF1', HWIF2') with test values (CV_HWIF1, CV_HWIF2) and in the event of a variance to move the automation controller (1) into a safe state.

2. Automation controller according to claim 1, having a test value table (PWT) with the test values (CV_HWIF1, CV_HWIF2) and a combination table (KT), in which combinations (K1,...,K6) of the assignments of the Ethernet channels (E11,...,E22) to the network interfaces (P1, P2) are listed, wherein a test value (CV_HWIF1, CV_HWIF2) assigned to the respective combination is stored in the test value table (PWT) for each combination (K1,...,K6).

3. Automation controller (1) according to claim 2, wherein the code instructions (SC) are designed to multiply the first reproduced register value (HWIF1') by a first factor (F1) and to test whether the product corresponds to the first test value (CV_HWIF1) and to multiply the second reproduced register value (HWIF2') by a second factor (F2) and to test whether the product corresponds to the second test value (CV_HWIF2) .

4. Automation controller (1) according to one of claims 1 to 3, wherein the register values (HWIF1, HWIF2) for the assignment of the Ethernet channels (E11,...,E22) to the network interfaces (P1, P2) are selected so that it is ensured that the first network (N1) and the second network (N2) are separated from one another.

5. Automation controller according to one of claims 2 to 4, wherein an input means (EM) is present, which is designed for a user to be able to select and set the combinations (K1,...,K6).

6. Method for operating an automation controller (1), wherein for the network separation of a first network (N1) and a second network (N2), a first register value (HWIF1) of a first register (5041) and a second register value (HWIF2) of a second register (5042) are monitored for falsifications as a result of hardware and software errors,
wherein the register values (HWIF1, HWIF2) are used to set a first or second selection circuit (Mux1, Mux2), here the selection circuits (Mux1, Mux2) are operated to assign Ethernet channels (E11,...,E22) of interface modules (IF1, IF2) to network interfaces (P1, P2) and thus to the networks (NW1, NW2) in accordance with the register values (HWIF1, HWIF2), wherein a number (ZZ) is generated from an operating system (FW) of the automation controller (1) in a definable cycle (Z) and a logical function (XOR) is applied with each cycle (Z) to the register values (HWIF1, HWIF2) with the number (Z), as a result of which a return value (Z') is produced, in the operating system (FW) the logical function (XOR) is applied in turn to the return value (Z') with the number (ZZ), as a result of which the register values (HWIF1', HWIF2') are produced, furthermore code instructions (SC) are run through, which compare the reproduced register values (HWIF1', HWIF2') with test values (CV_HWIF1, CV_HWIF2) and in the event of a variance move the automation controller (1) into a safe state.

7. Method according to claim 6, wherein a test value table (PWT) with the test values (CV_HWIF1, CV_HWIF2) and a combination table (KT), in which combinations (K1,...,K6) of the assignments of the Ethernet channels (E11,...,E22) to the network interfaces (P1, P2) are listed, is used, wherein a test value (CV_HWIF1, CV_HWIF2) assigned to the respective combination (K1,...,K6) is stored in the test value table (PWT) for each combination (K1,...,K6).

8. Method according to claim 6 or 7, wherein with the code instructions (SC) the first reproduced register value (HWIF1') is multiplied by a first factor (F1) and a test is carried out to determine whether the product corresponds to the first test value (CV_HWIF1) and the second reproduced register value (HWIF2') is multiplied by a second factor (F2) and a test is carried out to determine whether the product corresponds to the second test value (CV_HWIF2).

9. Method according to one of claims 6 to 8, wherein the automation controller (1) is operated as an automation control unit designed for functional safety and the network separation of the first network (N1) and the second network (N2) is carried out according to IEC standard 61784-3.

## Revendications

1. Unité (1) de commande d'automatisation comprenant
- un processeur (MP), sur lequel un système (FW) de fonctionnement est chargé,
- un premier module (IF1) d'interface ayant au moins un premier canal (E11) Ethernet et un deuxième canal (E12) Ethernet, qui sont raccordés à un premier circuit (Mux1) de sélection,
- un deuxième module (IF2) d'interface ayant au moins un premier canal (EA21) d'Ethernet et un deuxième canal (EA22) d'Ethernet, qui sont raccordés à un deuxième circuit (Mux2) de sélection,
- une première interface (P1) de réseau pour le raccordement à un premier réseau (N1) et une deuxième interface (P2) de réseau pour le raccordement à un deuxième réseau (N2),
- des moyens (VM) de liaison conformés pour relier les circuits (Mux1, Mux2) de sélection aux interfaces (P1, P2) de réseau,
- un premier registre (5041) ayant une première valeur (HWIF1) de registre et un deuxième registre (5042) ayant une deuxième valeur (HWIF2) de registre, les circuits (Mux1, Mux2) de sélection étant conformés conformément aux valeurs (HWIF1, HWIF2) de registre pour associer les canaux (E11,...,E22) d'Ethernet aux interfaces (P1, P2) de réseau,
**caractérisée en ce que** le système (FW) de fonctionnement est conformé pour créer un nombre (ZZ) dans un cycle (Z) pouvant être déterminé et **en ce qu'**il y a un moyen (AM) d'interrogation, qui est conformé pour appliquer avec chaque cycle (Z) aux valeurs (HWIF1, HWIF2) de registre avec le nombre (ZZ) une fonction (XOR) logique, grâce à quoi il est produit une valeur (ZZ') de restitution, le système (FW) de fonctionnement est conformé en outre pour appliquer à la valeur (ZZ') de restitution avec le nombre (ZZ) la fonction (XOR) logique, grâce à quoi il est produit à nouveau les valeurs (HWIF1', HWIF2') de registre, il y a en outre des instructions (SC) de code, qui sont conformés pour comparer les valeurs (HWIF1', HWIF2') de registre produites à nouveau à des valeurs (CV_HWIF1, CV_HWIF2) de contrôle et s'il y a un écart pour mettre l'unité (1) de commande d'automatisation dans un état sécurisé.

2. Unité de commande d'automatisation suivant la revendication 1, comportant une table (PWT) de valeurs de contrôle ayant les valeurs (CV_HWIF1, CV_HWIF2) de contrôle et une table (KT) de combinaison, dans laquelle des combinaisons (K1,...,K6) des associations des canaux (E11,...,E22) Ethernet aux interfaces (P1, P2) de réseau sont énumérées, dans lequel dans le tableau (PWT) de valeurs de contrôle est mise en mémoire pour chaque combinaison (K1,...,K6) une valeur (CV_HWIF1, CV_HWIF2) de contrôle associée à la combinaison respective.

3. Unité (1) de commande d'automatisation suivant la revendication 2, dans lequel les instructions (SC) de code sont conformées pour multiplier la première valeur (HWIF1') de registre produite à nouveau par un premier facteur (F1) et pour contrôler si le produit correspond à la première valeur (CV_HWIF1) de contrôle, et pour multiplier la deuxième valeur (HWIF2') de registre produite à nouveau par un deuxième facteur (F2) et pour contrôler si le produit correspond à la deuxième valeur (CV_HWIF2) de contrôle.

4. Unité (1) de commande d'automatisation suivant l'une des revendications 1 à 3, dans laquelle les valeurs (HWIF1, HWIF2) de registre sont choisies pour l'association des canaux (E11,...,E22) Ethernet aux interfaces (P1, P2) de réseau, de manière à s'assurer que le premier réseau (N1) et le deuxième réseau (N2) soient séparés l'un de l'autre.

5. Unité de commande d'automatisation suivant l'une des revendications 2 à 4, dans lequel il y a un moyen (EM) d'entrée, qui est conformé de manière à ce qu'un utilisateur puisse sélectionner et choisir les combinaisons (K1,...,K6).

6. Procédé pour faire fonctionner une unité (1) de commande d'automatisation, dans lequel pour séparer un premier réseau (N1) d'un deuxième réseau (N2), on contrôle, en ce qui concerne des altérations par défaut de matériel et de logiciel, une première valeur (HWIF1) d'un premier registre (5041) et une deuxième valeur (HWIF2) de registre d'un deuxième registre (5042), dans lequel on utilise les valeurs (HWIF1, HWIF2) de registre pour le réglage d'un premier et respectivement d'un deuxième circuit (Mux1, Mux2) de sélection, les circuits (Mux1, Mux2) de sélection fonctionnant ainsi de manière à associer, conformément aux valeurs (HWIF1, HWIF2) de registre des canaux (E11,...,E22) Ethernet de modules (IF1, IF2) d'interface à des interfaces (P1, P2) de réseau et ainsi aux réseaux (NW1, NW2), dans lequel à partir d'un système (FW) de fonctionnement de l'unité (1) de commande d'automatisation, on crée dans un cycle (Z) pouvant être déterminé un nombre (ZZ) et avec chaque cycle (Z) on applique aux valeurs (HWIF1, HWIF2) de registre avec le nombre (Z) une fonction (XOR) logique, grâce à quoi il est produit une valeur (Z') de restitution, on applique dans le système (FW) de fonctionnement à nouveau à la valeur (Z') de restitution avec le nombre (ZZ) la fonction (XOR) logique, grâce à quoi on produit à nouveau les valeurs (HWIF1', HWIF2') de registre, on effectue en outre des instructions (SC) de code, qui comparent les valeurs (HWIF1', HWIF2') de registre produites à nouveau à des valeurs (CV_HWIF1, CV_HWIF2) de contrôle et, s'il y a un écart, on met l'unité (1) de commande d'automatisation dans un état sécurisé.

7. Procédé suivant la revendication 6, dans lequel on utilise une table (PWT) de valeurs de contrôle ayant les valeurs (CV_HWIF1, CV_HWIF2) de contrôle et une table (KT) de combinaisons, dans laquelle des combinaisons (K1,...,K6) des associations des canaux (E11, ..., E22) Ethernet aux interfaces (P1, P2) de réseau sont énumérées, dans lequel on met dans la table (PWT) de valeurs de contrôle, pour chaque combinaison (K1,...,K6), une valeur (CV_HWIF1, CV_HWIF2) de contrôle associée à la combinaison (K1,...,K6) respective.

8. Procédé suivant la revendication 6 ou 7, dans lequel par les instructions (SC) de code, on multiplie la première valeur (HWIF1') de registre produite à nouveau par un premier facteur (F1) et on contrôle si le produit correspond à la première valeur (CV_HWIF1) de contrôle, et on multiplie la deuxième valeur (HWIF2') de registre produit à nouveau par un deuxième facteur (F2) et on contrôle si le produit correspond à la deuxième valeur (CV_HWIF2) de contrôle.

9. Procédé suivant l'une des revendications 6 à 8, dans lequel on fait fonctionner l'unité (1) de commande d'automatisation comme une commande d'automatisation conçue en sécurité fonctionnelle et séparer le premier réseau (N1) du deuxième réseau (N2) s'effectue suivant la norme IEC 61784-3.
